# EUROPÄISCHE PATENTANMELDUNG

(11) **EP 1 243 312 A1**
(43) Veröffentlichungstag der Anmeldung: **25.09.2002**
(21) Anmeldenummer: 01106990.3
(22) Anmeldetag: 21.03.2001
(51) Int. Cl.: B01D 63/08

(54) **Vorrichtung zum Filtern und Trennen von Strömungsmedien nach dem Prinzip der Ultrafiltration**

(71) Anmelder: Rochem UF-Systeme GmbH, 20355 Hamburg (DE)
(72) Erfinder: Heine, Wilhelm, Hamburg 21077 (DE); Günther, Dr. Ralph, Buchholz 21244 (DE)
(74) Vertreter: Niedmers, Ole, Dipl.-Phys.

(57) **Zusammenfassung**

Es wird eine Vorrichtung 10 zum Filtern und Trennen von Strömungsmedien (15), insbesondere nach dem Prinzip der Ultrafiltration, vorzugsweise von salzhaltigen, flüssigen Medien, vorgeschlagen, umfassend ein druckdichtes Gehäuse (11) mit einem Einlaß (12) für das Strömungsmedium (15) und Auslässen (13, 14) für das Retentat sowie das Permeat und einer Mehrzahl im Gehäuse (11) aufgenommen, voneinander beabstandeter Filterelemente (17), die nach Art eines Membrankissens ausgebildet sind und die vom Strömungsmedium (15) umflossen werden, wobei im Gehäuse (11) eine Mehrzahl von gesonderten Stapeln (18) von Membrankissen (17) hintereinander angeordnet ist und wobei die Stapel (18) hintereinander vom Strömungsmedium (15) umflossen werden. Dabei werden die Membrankissen (17) im Stapel (18) derart angeordnet, daß das Strömungsmedium (15) die Membrankissen (17) nacheinander mäanderförmig umströmt.

## Beschreibung

Die Erfindung betrifft eine Vorrichtung zum Filtern und Trennen von Strömungsmedien, insbesondere nach dem Prinzip der Ultrafiltration, vorzugsweise von salzhaltigen, flüssigen Medien, umfassend ein druckdichtes Gehäuse mit einem Einlaß für das Strömungsmedium und Auslässen für das Retentat sowie das Permeat und einer Mehrzahl im Gehäuse aufgenommener, voneinander beabstandeter Filterelemente, die nach Art eines Membrankissens ausgebildet sind und die vom Strömungsmedium umflossen werden, wobei im Gehäuse eine Mehrzahl von gesonderten Stapeln von Membrankissen hintereinander angeordnet ist und wobei die Stapel hintereinander vom Strömungsmedium umflossen werden.

Eine Vorrichtung dieser Art ist bekannt (EP-A-0 707 884). Bei dieser bekannten Vorrichtung bilden die Stapel von voneinander beabstandeten Membrankissen innerhalb der Vorrichtung quasi einen offenen Kanal für das Strömungsmedium, mit dem hohen Strömungsgeschwindigkeiten des Strömungsmediums zwischen dem Einlaß des Strömungsmediums und dem Auslaß des die Vorrichtung als Retentat verlassenden Strömungsmediums möglich sind. Mit der bekannten Vorrichtung werden nun bspw. Volumenströme von 20 m³h⁻¹ erreicht. Regelmäßig sind für den Betrieb der bekannten Vorrichtung deshalb wenigstens zwei Pumpen erforderlich, nämlich eine Pumpe, die einen hohen Betriebsdruck aufbaut, mit dem die Vorrichtung betrieben werden muß, und eine Pumpe, die für den Aufbau der Strömungsgeschwindigkeit des zu trennenden Mediums durch die Vorrichtung hindurch sorgt. Das Vorsehen von wenigstens zwei Pumpen für den Betrieb der bekannten Vorrichtung erfordert die Bereitstellung einer nicht unbeträchtlichen elektrischen Leistung, was nachteilig in bezug auf den Einsatzzweck der Vorrichtung sein kann, wenn am Einsatzort die Leistung nicht zur Verfügung steht. Problematisch sind auch die in diesem Zusammenhang benutzten Kreiselpumpen zur Aufbringung des für den Betrieb der Vorrichtung hohen Betriebsdrucks im Zusammenwirken mit der Pumpe, die für den Aufbau und das Konstanthalten der Strömungsgeschwindigkeit des Strömungsmediums durch die Vorrichtung hindurch erforderlich ist.

Es ist Aufgabe der vorliegenden Erfindung, eine Vorrichtung der eingangs genannten Art zu schaffen, für deren Betrieb, d.h. zum Aufbau des Betriebsdrucks des von der Vorrichtung zu trennenden bzw. zu filternden Strömungsmediums, und zur Aufrechterhaltung der Strömungsgeschwindigkeit des Strömungsmediums durch die Vorrichtung hindurch lediglich eine Pumpe erforderlich ist, wobei die Vorrichtung, falls es erforderlich sein sollte, auf einfache Weise zu reinigen und zu warten sein soll und die Vorrichtung unter weitgehender Beibehaltung bisher bekannter Konstruktionsprinzipien einfach und kostengünstig herstellbar sein soll und ohne weiteres an den individuellen Belastungsgrad des zu trennenden Strömungsmediums angepaßt werden können soll.

Gelöst wird die Aufgabe gem. der Erfindung dadurch, daß die Membrankissen im Stapel derart angeordnet sind, daß das Strömungsmedium die Membrankissen nacheinander mäanderförmig umströmt.

Mittels der erfindungsgemäßen Lösung ist es möglich, die für die Aufrechterhaltung der Strömungsgeschwindigkeit bisher nötige, leistungskostende Kreislaufpumpe wegzulassen, d.h. lediglich eine Pumpe zum Betrieb der Vorrichtung bereitstellen zu müssen, da aufgrund des sehr viel geringeren Volumenstromes von bspw. 0,8 m³h⁻¹ die für den Aufbau des Betriebsdrucks nötige Pumpe auch die Funktion des Aufbaus der Strömungsgeschwindigkeit des zu trennenden Mediums in der Vorrichtung übernehmen kann. Es ist somit prinzipiell nur eine Pumpe zum Betrieb der erfindungsgemäßen Vorrichtung nötig. Dennoch gestattet die erfindungsgemäße Vorrichtung, die bspw. mit einem Druck von bis zu 120 bar und darüber betreibbar ist, wie die bekannte, mit verhältnismäßig hohem Energieaufwand zu betreibende Vorrichtung, die Anpassung der Vorrichtung an den individuellen Belastungsgrad der zu trennenden Strömungsmedien, bspw. hochsalzhaltige Lösungen aus Abwasserprozessen, wie sie in der Tierhaltung, bspw. in Schweine- und Rindergülle anzutreffen ist, und auch an den Salzgehalt von Seewasser, indem bspw. eine für den gewünschten Anwendungszweck benötigte Anzahl von Stapeln und eine benötigte Anzahl von Membrankissen pro Stapel vorgesehen wird.

Da die Vorrichtung mit einem sehr hohen Betriebsdruck von bis zu 120 bar, ggf. auch noch darüber, betreibbar ist, ist ein aufgrund der mäanderförmigen Durchströmung des Strömungsmediums durch die Stapel verbundener Druckabfall zwischen Eingang der Vorrichtung und Ausgang der Vorrichtung verkraftbar.

Um konstruktiv innerhalb der Vorrichtung sicherzustellen, daß die Stapel nacheinander mäanderförmig vom Strömungsmedium durchflossen werden, bilden die Stapel vorzugsweise ein mit einem Eingang und mit einem Ausgang für das Strömungsmedium versehenes, ansonsten aber geschlossenes Volumen. Damit ist auch sichergestellt, daß alle Stapel der Menge aller Stapel pro Vorrichtung einem gleichen Volumenstrom ausgesetzt sind.

Um das quasi geschlossene Volumen eines Stapels konstruktiv einfach zu verwirklichen, wird das Volumen vorteilhafterweise durch ein Trennelement, das bspw. quadratisch bzw. rechteckig ausgebildet sein kann, begrenzt, wobei im Trennelement ein Eingang bzw. ein Ausgang ausgebildet sind, die vorzugsweise schlitzförmig geformt sein können, und zwar bspw. entsprechend der Querschnittsform des Strömungsquerschnitts des Strömungsmediums zwischen zwei im Stapel voneinander beabstandet angeordneten Membrankissen.

Die Membrankissen selbst können an sich auf beliebige geeignete Weise ausgebildet sein, sie sind in Anpassung an die modular ausgebildete Vorrichtung aber vorzugsweise rechteckförmig ausgebildet, entsprechend des der gewünschten Größe des einen Stapels jeweils aufnehmenden Schalenelements, das in das Gehäuse der Vorrichtung eingesetzt wird.

Die Membrankissen sind ansonsten auf an sich bekannte Weise hergestellt und weisen wenigstens eine Permeatabflußöffnung auf, durch die das zwischen den beiden, das Membrankissen bildenden äußeren Membranelementen gesammelte Permeat abgeführt werden.

Sehr vorteilhaft ist es, die Membrankissen im Stapel derart versetzt aufeinanderzustapeln, daß abwechselnd jedes zweite Membranelement mit seinem einen Ende am Trennelement anliegt. Auf diese Weise ist es unnötig, gesonderte Maßnahmen vorsehen zu müssen, die das Strömungsmedium veranlassen, nachdem es über die eine Seite des Membrankissens geflossen ist, seine Flußrichtung umzukehren, so daß es über die nächste Seite des Membrankissens strömt, um dann wiederum um das benachbarte Membrankissen auf gleiche Weise usw. herumzuströmen. Die Membrankissen selbst bilden durch die vorbeschriebene vorzugsweise Anordnung selbst die Umlenkmaßnahme für das Strömungsmedium.

Zwar ist es möglich, die Membrankissen, die jedenfalls bei Betrachtung des die Membrankissen bildenden Membranwerkstoffs ein verhältnismäßig instabiles Gebilde bilden, durch geeignete äußere Maßnahmen flächenstabil zu halten; derartige Maßnahmen sind aber konstruktiv aufwendig und äußerst hinderlich bei der Demontage im Falle der Beschädigung der Membrankissen oder im Falle einer kontinuierlichen Wartung. Auch das Vorsehen von Abstandselementen, wie sie im Stand der Technik bekannt sind, auf denen die Membrankissen stabil gehalten werden können, hat den erheblichen Nachteil, daß dadurch der Druckabfall des Strömungsmediums vom Eingang in die Vorrichtung zum Ausgang noch erhöht wird und die Gefahr von auf alle Fälle zu vermeidenden Ablagerungen an den Auflagepunkten der Membrankissen auf Abstandselementen und dgl. besteht. Aus diesen Gründen wird vorgeschlagen, die Membrankissen vorteilhafterweise derart auszugestalten, daß zwischen den diese begrenzenden äußeren Membranelementen ein flächiges Stabilisierungselement angeordnet ist, das derart ausgestaltet ist, daß das Membranelement auch bei hohen Betriebsdrücken und hohen Überströmgeschwindigkeiten des Strömungsmediums über die Membranelemente fortwährend flächig aufgespannt gehalten wird. Damit kann auch erreicht werden, daß sich die Membrankissen des Membrankissenstapels während des Betriebes der Vorrichtung nicht berühren, wodurch bei Berührung wiederum Ablagerungszellen von Inhaltsstoffen des Strömungsmediums gebildet werden können, die die Trennwirkung der Membrankissen zunehmend verschlechtern könnten.

Das Stabilisierungselement ist vorteilhafterweise aus Kunststoff ausgebildet, grundsätzlich sind aber auch beliebige andere geeignete Werkstoffe, bspw. Verbundwerkstoffe oder auch Metall, geeignet. Die Wahl des Werkstoffs des Stabilisierungselements hängt im wesentlichen von der Art des Strömungsmediums bzw. des Drucks, bei dem die Vorrichtung in bezug auf das Strömungsmedium betrieben wird, ab.

Es ist auch vorteilhaft, zur äußeren Beabstandung der Membrankissen ringförmige Abstandselemente, die elastomere Dichtelemente aufweisen können, vorzusehen. Es ist aber auch möglich, zur äußeren Beabstandung der Membrankissen streifenförmige Abstandselemente vorzusehen, die ggf. den Vorteil haben können, daß sie die Montage des Membrankissenstapels erleichtern können.

Das eigentliche Dichtelement kann von einem gesonderten Oben-Ring gebildet werden, es kann aber auch durch das geeignet in bezug auf den dafür verwendeten Werkstoff elastisch und dichtend eingestellte ringförmige Abstandselement selbst neben der Beabstandungswirkung eine Dichtwirkung erzielt werden.

Wie schon weiter oben angedeutet, umfaßt das Membrankissen wenigstens eine Permeatabflußöffnung, es kann aber auch vorteilhaft sein, eine Mehrzahl von Permeatabflußöffnungen am Membrankissen vorzusehen. Dieses gilt insbesondere dann, wenn, wie oben schon dargestellt, auf einfache Weise sichergestellt werden soll, daß bei versetzt aufeinandergestapelten Membrankissen im Stapel abwechselnd jedes zweite Membrankissen an seinem einen Ende am Trennelement anliegen soll, denn dann, wenn vorteilhafterweise die Permeatabflußöffnungen asymmetrisch in bezug auf den Abstand zu einer Schmalseite bzw. zu dem Ende des Membrankissens auf einer gedachten Längsachse des rechteckförmig ausgebildeten Membrankissens die Permeatabflußöffnungen angeordnet sind, kann eine mäanderförmige Ausbildung des Strömungskanals ohne weitere Umlenkmaßnahmen erreichtwreden. Insofern brauchen bei einer Montage eines Stapels aus derart ausgebildeten Membranelementen die Membranelemente lediglich abwechseln, um je 180° gedreht aufeinandergestapelt zu werden, so daß dadurch automatisch ein mäanderförmiges Durchströmen des Strömungsmediums durch den derart aufgebauten Stapel ohne weitere Maßnahmen erreicht wird.

Vorzugsweise weisen die Stapel ein im wesentlichen rechteckförmiges Querschnittsvolumen auf, was sowohl in Querrichtung als auch in Längsrichtung des Stapels aus im wesentlichen rechteckförmigen Membrankissen gilt.

Eine derartige Ausgestaltung der Stapel hat den Vorteil, daß diese sich dann auf einfache Weise in der Vorrichtung unterbringen lassen, wenn die Stapel jeweils von zwei die Stapel in sich einschließenden, im Außenquerschnitt im wesentlichen halbkreisförmigen Schalenelementen aufgenommen werden und dabei vorzugsweise der Innenquerschnitt der Schalenelemente im aus zwei Schalenelementen zusammengesetzten Zustand im wesentlichen rechteckig ausgebildet ist. Dabei sind die Abmaße vorzugsweise derart gewählt, daß der Stapel aus Membranelementen kraftschlüssig zwischen den zwei in bezug auf ihre Außenkontur halbkreisförmigen Schalenelementen aufgenommen wird, denn die Membrankissen können dann im Zusammenwirken mit den dazwischen angeordneten Abstandselementen sicherstellen, daß keine zusätzlichen Spannbolzen oder dgl. nötig sind, um die Permeatabflußöffnungen der Membrankissen dichtend, aber unter Beibehaltung eines definierten Abstandes zwischen zwei Membrankissen gegenüber dem zwischen den Membrankissen strömenden Strömungsmedium zu halten.

Schließlich weisen die Schalenelemente vorzugsweise einen das Schalenelement in Längsrichtung durchquerenden Permeatabflußkanal auf, der mit Permeatablauföffnungen, die in den Innenbodenbereich der Schalenelemente münden, verbunden sind. Durch diese Ausgestaltung ist der Permeatabflußkanal integral mit den Schalenelementen ausgebildet, was zudem noch den Vorteil hat, daß auch aufgrund des damit verbundenen Wegfalls gesonderter Permeatabflußmaßnahmen diese Ausgestaltung zu einer weiteren kostengünstigen Bereitstellbarkeit der Vorrichtung führt.

Die Erfindung wird nun unter Bezugnahme auf die nachfolgenden schematischen Zeichnungen anhand eines Ausführungsbeispieles eingehend beschrieben. Darin zeigen:
- Fig. 1: in der Seitenansicht im Schnitt eine Vorrichtung mit beispielsweise zwei Stapelschalen, in denen jeweils ein Stapel aus Membrankissen zur Ausbildung eines mäanderförmigen Strömungsweges für das Strömungsmedium angeordnet ist,
- Fig. 2: einen Ausschnitt aus der Darstellung von Fig. 1, einen vollständigen Stapel darstellend, der in das umgebende Gehäuse eingesetzt ist, im gegenüber der Darstellung von Fig. 1 vergrößertem Maßstab,
- Fig. 3a, 3b: ein Fließschema des Strömungsmediums durch zwei benachbart angeordnete Stapel aus Membrankissen,
- Fig. 4a: das Trennelement zwischen zwei Stapeln in der Vorderansicht,
- Fig. 4b: das in Fig. 4a dargestellte Trennelement in der Seitenansicht,
- Fig. 5: stark schematisiert ein Membrankissen, wie es typischerweise in der Vorrichtung verwendet wird, mit zwei asymmetrisch, in bezug auf die Abstände zur Schmalseite des Membrankissens angeordneten Permeatabflußöffnungen,
- Fig. 6a: ein scheibenförmig ausgebildetes Abstandselement in der Seitenansicht und
- Fig. 6b: das in Fig. 6a abgebildete Abstandselement in der Draufsicht.

Die Vorrichtung 10 besteht im wesentlichen aus einem Gehäuse, das auf an sich bekannte Weise beidseitig mit Endelementen 110, 111 druckdicht über umlaufende Dichtungsmittel 112, 113, bspw. in Form von 0-Ringen, gegenüber dem Gehäuse 11 verschlossen ist. Im Endelement 110 ist ein Einlaß 12 für das zur Vorrichtung 10 zuzuführende Strömungsmedium 15 vorgesehen, im Endelement 111 ist ein Auslaß 13 für das angereicherte Strömungsmedium 150, das sog. Retentat, vorgesehen, und es ist ein Auslaß 14 für das Permeat vorgesehen. Die Endelemente 110, 111 werden über Sicherungsringe 114, 115 in ihrer Position im Gehäuse 11 gesichert. Das Gehäuse 11 weist vorzugsweise einen kreisförmigen Querschnitt auf, ein kreisförmiger Querschnitt ist jedoch nicht für alle Fälle bei der Ausbildung des Gehäuses 11 zwingend.

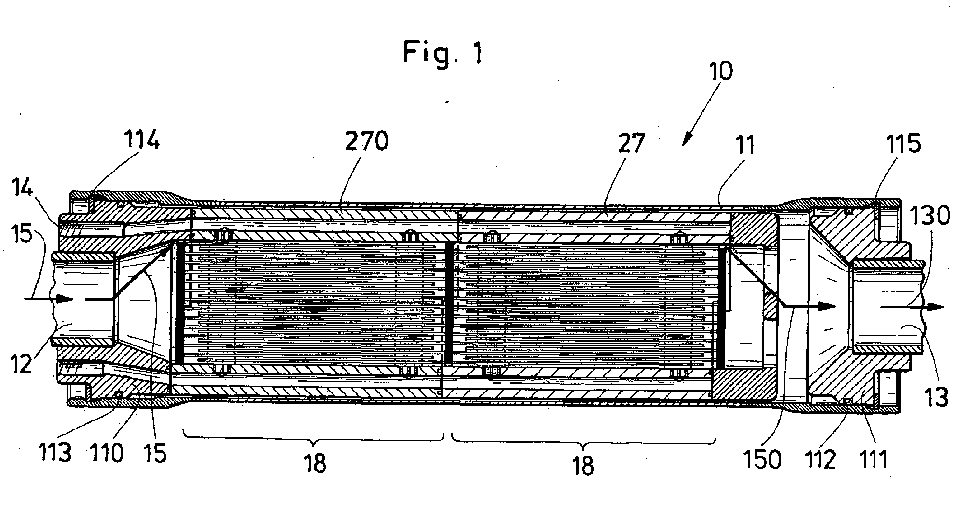

Im Gehäuse 11 ist eine Mehrzahl von Stapelschalen 27, 270 vorgesehen, wobei im Beispiel gem. Fig. 1 zwei Stapelschalen 27, 270 vorgesehen sind. Es sei darauf hingewiesen, daß die Anzahl der Stapelschalen 27, 270 pro Vorrichtung 10 beliebig in Abhängigkeit der Länge des Gehäuses 11 variiert werden kann, und zwar auch in Abhängigkeit der Art des zu trennenden Strömungsmediums der Art und des Umfangs der darin enthaltenen, zu trennenden Inhaltsstoffe. Realisiert worden sind schon Vorrichtungen 10 mit zehn hintereinander angeordneten Stapelschalen 27.

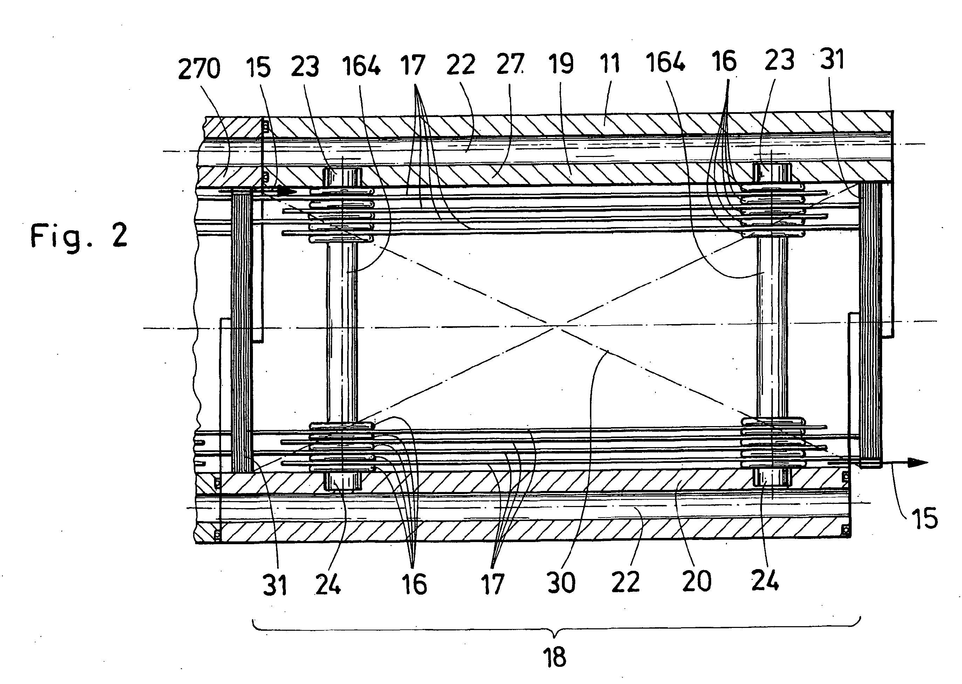

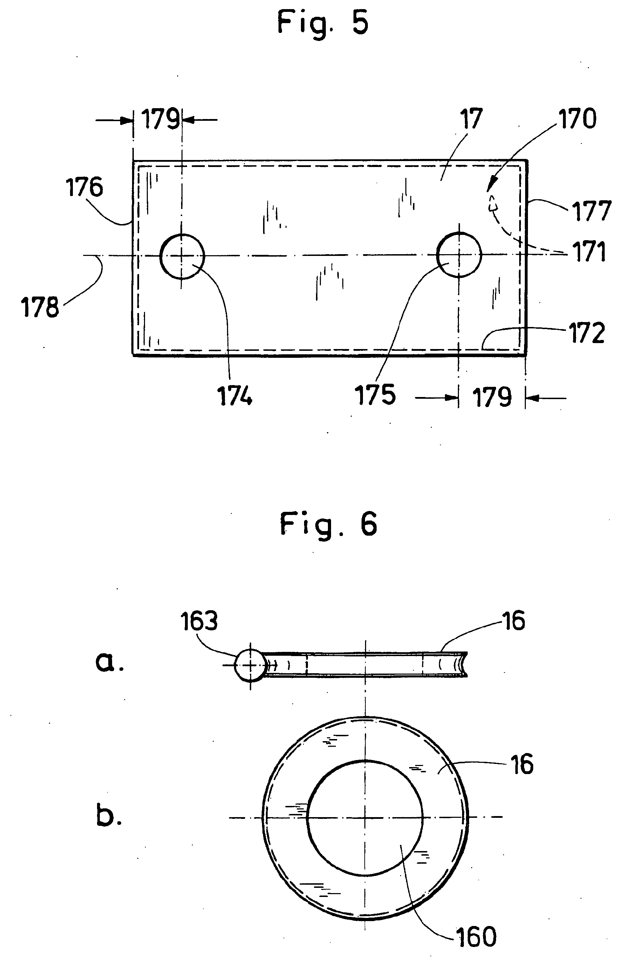

Die Stapelschalen 27, 270 sind alle identisch, so daß im folgenden lediglich eine Stapelschale 27 beschrieben wird. Die Stapelschale 27 besteht aus zwei Schalenelementen 19, 20, vgl. Fig. 2. Die Schalenelemente 19, 20 weisen einen im wesentlichen halbkreisförmigen Außenquerschnitt auf. Der Innenquerschnitt der Schalenelemente 19, 20 ist im wesentlichen rechteckig ausgebildet, wobei zwei miteinander verbundene Schalenelemente 19, 20, vgl. Fig. 2, einen annähernd quadratisch bzw. rechteckigen Innenquerschnitt aufweisen. Die Schalenelemente 19, 20 können mittels hier nicht dargestellter Verbindungsmittel, bspw. mittels einer Bolzen-Mutter-Verbindung, lösbar miteinander verbunden werden. Zwei Schalenelemente 19, 20 schließen in sich kraftschlüssig einen Stapel 18 ein, der durch eine Mehrzahl von Abstandselementen 16, vgl. die Figuren 2 und 6 a, 6 b, und durch Membrankissen 17 gebildet wird, die jeweils zwischen zwei Abstandselementen 16 angeordnet sind. Membrankissen 17 derart, wie sie in der Vorrichtung 10 zur Bildung des Stapels 18 zusammen mit den Abstandselementen 16 verwendet werden, sind bspw. in der EP-B-0 129 663 beschrieben.

Die hier in der Vorrichtung 10 verwendeten, an sich bekannten Membrankissen 17, weisen einen in dem vorerwähnten, vorveröffentlichten Dokument beschriebenen bekannten Aufbau auf, so daß bezüglich des Aufbaus dieser Membrankissen 17 auf das vorerwähnte Dokument verwiesen wird. Die bekannten Membrankissen 17 sind bei der hier beschriebenen Vorrichtung 10 jedoch dahingehend modifiziert, daß zwischen den das Membrankissen 17 äußerlich begrenzenden, eigentlichen Membranelementen 170, 171 ein flächiges Stabilisierungselement 172, in Fig. 5 gestrichelt dargestellt, angeordnet ist. Das Stabilisierungselement 172, das aus Kunststoff, Metall oder einem beliebigen anderen Werkstoff bestehen kann, ist im umlaufenden Randbereich, hier im einzelnen nicht gesondert dargestellt, beidseitig abgeschrägt ausgebildet, um für das Strömungsmedium eine schräge bzw. geneigte Anströmkante zu bilden. Durch den hier verwendeten modifizierten Aufbau des Membrankissens 17 gegenüber dem in dem vorerwähnten Dokument beschriebenen weist dieses eine hohe Eigenstabilität auf, so daß bei der Vorrichtung 10 keine besonderen, die Membrankissen 17 tragenden, bzw. abstützenden Abstandselemente.

Die Abstandselemente 16 sind bei der in den Figuren dargestellten Ausgestaltung der Vorrichtung 10 ringförmig ausgebildet und bestehen vorteilhafterweise aus einem elastomeren Werkstoff wie Gummi oder aus einem entsprechenden beliebigen geeigneten Kunststoff. Das Abstandselement 16 weist eine Öffnung 160 auf, entsprechend der Größe der Permeatabflußöffnungen 174, 175 des Membrankissens 17. Nur zur Verdeutlichung ist die Darstellung gem. Fig. 6 in einem gegenüber Fig. 5 größeren Maßstab dargestellt. Das Abstandselement 16 hat dichtende Wirkung gegenüber zwei Membrankissen 17, und zwar aufgrund der Ausbildung des Abstandselements 16 selbst oder auch zusätzlich oder alternativ durch ein Dichtelement 163, vgl. die strichpunktierte Darstellung in Fig. 6 a, das hier als das Abstandselement 16 umlaufender 0-Ring dargestellt ist. Das Abstandselement 16 hat somit dichtende Wirkung gegenüber zwei Membrankissen 17, zwischen denen es eingeschlossen ist und legt den Abstand zwischen den beiden benachbarten Membrankissen 17 entsprechend seiner Dicke fest. Im Zustand des Stapels 18 aus Membrankissen 17 und den jeweils dazwischen eingeschlossenen Abstandselementen 16, vgl. Fig. 2, kann kein Strömungsmedium 15 zu den Permeatabflußöffnungen 174, 175 aufgrund der dichtenden Wirkung der Abstandselemente 16, ggf. mit zusätzlichem Dichtelement 163, wie vorangehend beschrieben, gelangen.

Die Permeatablauföffnungen 23, 24 in den Schalenelementen 19, 20, die in Längsrichtung den gleichen Abstand voneinander haben wie die Permeatabflußöffnungen 174, 175 des Membrankissens 17, münden in einen in Längsrichtung die Schalenelemente 19, 20 durchquerenden Permeatabflußkanal 22. Pro Stapel 18 sind zwei Ablaufbolzen 164 vorgesehen, die den gesamten Stapel 18 aus Membrankissen 17 und Abstandselementen 16 durchqueren. Die Ablaufbolzen 164 weisen in axialer Richtung eine Mehrzahl von hier nicht gesondert dargestellten Permeatablaufrinnen auf, über die das Permeat, das aus den Membrankissen 17 über deren Permeatabflußöffnungen 174, 175 austritt, abfließt und in die Permeatablauföffnungen 23, 24 der Schalenelemente 19, 20 eintritt.

Der vorbeschriebene Stapel 18 wird somit über die erwähnten, aber hier nicht dargestellten Verbindungsmittel kraftschlüssig zwischen zwei Schalenelementen 19, 20 eingeschlossen, wobei im verbundenen Zustand der Schalenelemente 19, 20 gewährleistet ist, daß das von den Membrankissen 17 getrennte Permeat 17 stirnseitig aus den Permeataustrittsöffnungen der Membrankissen 17 über die Öffnung 160 der Abstandselemente 16, über die Permeatablaufrinnen der Ablaufbolzen 164 und über die Permeatablauföffnungen 23, 24 der Schalenelemente 19, 20 ablaufen und im Permeatabflußkanal gesammelt werden kann und von dort zum Auslaß 14 der Vorrichtung geleitet werden kann.

Alle benachbarten Stapelschalen 27, 270, im Beispiel sind lediglich zwei Stapelschalen gezeigt, können jeweils über in den Stapelschalen 27, 270 ausgebildete geeignete Verbindungen lösbar miteinander verbunden werden. Diese Verbindungen können bspw. Renkverbindungen sein. Dichtelemente zwischen den benachbarten Stapelschalen gewährleisten einen druckdichten Strömungsweg des Strömungsmediums gegenüber dem Strömungsweg des in der Vorrichtung 10 erzeugten Permeats.

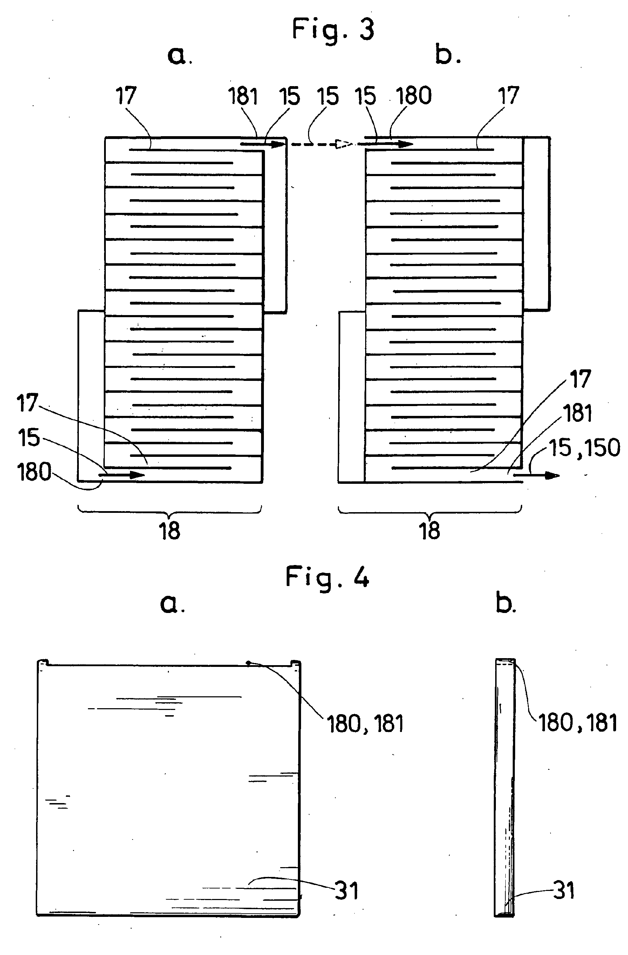

Die Stapel 18, vgl. insbesondere Fig. 2, bilden zusammen mit den Stapelschalen im zusammengefügten Zustand aufgrund des die Stapelschalen 27, 270 im wesentlichen quer begrenzenden Trennelements 31, vgl. die Fig. 4 a, 4 b ein geschlossenes Volumen 30, angedeutet in Fig. 2 durch die gekreuzten, gestrichelten Linien. Die Trennelemente 31, zwischen denen jeweils das Volumen 30 begrenzt wird, weisen einen Eingang 180 bzw. einen Ausgang 181 für das Strömungsmedium 15 auf. Eingang 180 und Ausgang 181 sind schlitzförmig geformt, vgl. die Fig. 4 a, b sowie Fig. 2. In einer Vorrichtung 10 wechseln sich Eingang 180 und Ausgang 181 bei hintereinander angeordneten Stapeln 18 ab.

Die Membrankissen 17 sind im Stapel 18 derart angeordnet, daß das Strömungsmedium 15 im Stapel 18 die Membrankissen 17 nacheinander mäanderförmig umströmt, vgl. bspw. das Fließschema zweier hintereinander geschalteter Stapel gem. Fig. 3. Die Membrankissen 17, vgl. Fig. 5, sind derart ausgebildet, daß die beiden Permeatabflußöffnungen 174, 175 mit unterschiedlichen Abständen 179 zu den die Membrankissen 17 begrenzenden Enden 176, 177 ausgebildet sind. Der größere Abstand 179, bezogen auf die Permeatabflußöffnung 175, in Fig. 5 rechts dargestellt, gewährleistet, daß das Membrankissen 17 am Trennelement 17 anliegt, wohingegen der kleinere Abstand 179 der Membranabflußöffnung 174 zum entgegengesetzten Rand 176 des Membrankissens 17, in Fig. 5 links dargestellt, gewährleistet einen Öffnung bzw. einen Umlenkspalt zwischen dem Ende 176 und dem Trennelement 31.

Durch abwechselndes Stapeln der Membrankissen 17, jeweils um 180° gedreht, liegt abwechselnd jedes zweite Membrankissen 17 mit seinem einen Ende am Trennelement 31 an. Dieses gilt für das andere Ende 176 am anderen Trennelement 31 entsprechend, vgl. Fig. 2. Auf diese Weise kann das über den schlitzförmigen Eingang 180 des Trennelements 31 das Strömungsmedium 15, vgl. insbesondere Fig. 3, in den Stapel aus Membrankissen 17 gelangen und wird, durch die Membrankissen 17 auf vorbeschriebene Weise geführt, mäanderförmig durch den gesamten Stapel bis zum Ausgang 181, wiederum gebildet durch das Trennelement 31, geleitet, das den Eingang 180 für den nächsten Stapel 18 darstellt, vgl. Fig. 3.

Zur bestimmungsgemäßen Funktion der Vorrichtung 10 wird eine bestimmte Menge an Stapelschalen 27 vorbereitet, und zwar auf die vorbeschriebene Weise. Die fertig vorbereiteten, d.h. vorkonfektionierten Stapelschalen 27 unter jeweiligem Einschluß des Stapels 18 aus Abstandselementen 16, Ablaufbolzen 164 und Filterelementen 17, die auf vorbeschriebene Weise gestapelt wurden, werden dann über geeignete Verbindungen verbunden und gesichert. Nachfolgend wird die miteinander verbundene Mehrzahl von Stapelschalen 27 in eine Öffnung des Gehäuses 11 eingeführt, wobei sichergestellt wird, daß der Permeatabflußkanal 22 der Stapelschalen 27 untereinander druckdicht verbunden wird und von der letzten Stapelschale 27 in eine entsprechende Öffnung des die andere Gehäuseöffnung abschließenden Endelements 111 mündet. Nachfolgend wird das Gehäuse 11 durch das zweite Endelement 110 über die Sicherungsringe 15 verschlossen, wobei sichergestellt ist, daß eine axiale Bewegung der Mehrzahl der miteinander verbundenen Stapelschalen 27 im Gehäuse 11 nicht möglich ist.

Nachfolgend wird zum bestimmungsgemäßen Gebrauch der Vorrichtung 10 das Strömungsmedium 15 über den Einlaß 12 in die Vorrichtung 10 geführt und gelangt über den Eingang 180 des Trennelements 31 des ersten Stapels 18 in das Volumen 30 und umströmt die Membrankissen 17 nacheinander mäanderförmig und gelangt von dort zum im benachbarten Trennelement 31 ausgebildeten Ausgang 181 des Volumens 30 des ersten Stapels 18. Von dort strömt das Strömungsmedium 15 in den benachbarten Stapel 18, und zwar wiederum über den Eingang 180 des Trennelements 31, der Ausgang 181 für den vorangehenden Stapel 18 war, und umströmt nun im nachgeschalteten Stapel 18 wiederum die Membrankissen 17 nacheinander mäanderförmig. Am Ende aller Stapel 18 verläßt das aufkonzentrierte Strömungsmedium 150, d.h. das Retentat, am Auslaß 13 die Vorrichtung 10 und wird auf geeignete Weise abgeführt.

Das Permeat, das von den Membrankissen 17 auf bekannte Weise geliefert wird, fließt über die Öffnung 160 der Filterelemente 16 bzw. die Permeatablauföffnungen 23, 24 der Schalenelemente 19, 20 zum Permeatabflußkanal 22 und von dort zum Auslaß 14 der Vorrichtung 10 und wird von dort aus einer weiteren Verwendung zugeführt.

### Bezugszeichenliste

10 Vorrichtung
11 Gehäuse
110 Endelement
111 Endelement
112 Dichtungsmittel
113 Dichtungsmittel
114 Sicherungsring
115 Sicherungsring
12 Einlaß (Strömungsmedium)
13 Auslaß (Retentat)
14 Auslaß (Permeat)
15 Strömungsmedium
150 aufkonzentriertes Strömungsmedium (Retentat)
16 Abstandselement
160 Öffnung
161
162
163 Dichtelement
17 Filterelement (Membrankissen)
170 Membranelement
171 Membranelement
172 Stabilisierungselement
173
174 Permeatabflußöffnung
175 Permeatabflußöffnung
176 Ende
177 Ende
178 Symmetrieachse
179 Abstand
18 Stapel
180 Eingang (Stapel)
181 Ausgang (Stapel)
19 Schalenelement
20 Schalenelement
21 Längsrichtung
22 Permeatabflußkanal
23 Permeatablauföffnung
24 Permeatablauföffnung
25
26
27 Stapelschale
270 Stapelschale
28
29
30 Volumen
31 Trennelement

## Patentansprüche

1. Vorrichtung (10) zum Filtern und Trennen von Strömungsmedien (15), insbesondere nach dem Prinzip der Ultrafiltration, vorzugsweise von salzhaltigen, flüssigen Medien, umfassend ein druckdichtes Gehäuse (11) mit einem Einlaß (12) für das Strömungsmedium (15) und Auslässen (13, 14) für das Retentat sowie das Permeat und einer Mehrzahl im Gehäuse (11) aufgenommener, voneinander beabstandeter Filterelemente (17), die nach Art eines Membrankissens ausgebildet sind und die vom Strömungsmedium (15) umflossen werden, wobei im Gehäuse (11) eine Mehrzahl von gesonderten Stapeln (18) von Membrankissen (17) hintereinander angeordnet sind und wobei die Stapel (18) hintereinander vom Strömungsmedium (15) umflossen werden, **dadurch gekennzeichnet, daß** die Membrankissen (17) im Stapel (18) derart angeordnet ist, daß das Strömungsmedium (15) die Membrankissen (17) nacheinander mäanderförmig umströmt.

2. Vorrichtung nach Anspruch 1, **dadurch gekennzeichnet, daß** die Stapel ein mit einem Eingang (180) und mit einem Ausgang (181) für das Strömungsmedium (15) versehenes, ansonsten aber geschlossenes Volumen (30) bilden.

3. Vorrichtung nach Anspruch 2, **dadurch gekennzeichnet, daß** das Volumen (30) durch ein Trennelement (31) begrenzt ist, in dem der Eingang (180) bzw. der Ausgang (181) ausgebildet sind.

4. Vorrichtung nach einem oder beiden der Ansprüche 2 oder 3, **dadurch gekennzeichnet, daß** der Eingang (180) und der Ausgang (181) schlitzförmig geformt sind.

5. Vorrichtung nach einem oder mehreren der Ansprüche 1 bis 4, **dadurch gekennzeichnet, daß** die Membrankissen (17) im wesentlichen rechteckig ausgebildet sind.

6. Vorrichtung nach einem oder mehreren der Ansprüche 3 bis 5, **dadurch gekennzeichnet, daß** die Membrankissen (17) im Stapel (18) derart versetzt aufeinandergestapelt sind, daß abwechselnd jedes zweite Membrankissen (17) an seinem einen Ende (176) am Trennelement (31) anliegt.

7. Vorrichtung nach einem oder mehreren der Ansprüche 1 bis 6, **dadurch gekennzeichnet, daß** in den Membrankissen (17) zwischen den diese begrenzenden äußeren Membranelementen (170, 171) ein flächiges Stabilisierungselement (172) angeordnet ist.

8. Vorrichtung nach einem oder mehreren der Ansprüche 1 bis 7, **dadurch gekennzeichnet, daß** zur äußeren Beabstandung der Membrankissen (17) ringförmige Abstandselemente (16), die elastomere Dichtelemente (163) aufweisen, vorgesehen sind.

9. Vorrichtung nach Anspruch 8, **dadurch gekennzeichnet, daß** das Dichtelement (163) ein 0-Ring ist.

10. Vorrichtung nach einem oder mehreren der Ansprüche 5 bis 9, **dadurch gekennzeichnet, daß** die Membrankissen (17) eine Mehrzahl von Permeatabflußöffnungen (174, 175) aufweisen.

11. Vorrichtung nach Anspruch 10, **dadurch gekennzeichnet, daß** die Permeatabflußöffnungen (174, 175) asymmetrisch in bezug auf den Abstand (179) zu einer Schmalseite des Membrankissens (17) auf einer gedachten Längsachse (178) des rechteckförmig ausgebildeten Membrankissens (17) angeordnet sind.

12. Vorrichtung nach einem oder mehreren der Ansprüche 1 bis 11, **dadurch gekennzeichnet, daß** die Stapel ein im wesentlichen rechteckförmiges Querschnittsvolumen aufweisen.

13. Vorrichtung nach einem oder mehreren der Ansprüche 1 bis 12, **dadurch gekennzeichnet, daß** die Stapel (18) jeweils von zwei die Stapel (18) in sich einschließenden, im Außenquerschnitt im wesentlichen halbkreisförmigen Schalenelementen (20) aufgenommen werden.

14. Vorrichtung nach Anspruch 13, **dadurch gekennzeichnet, daß** wenigstens eines der Schalenelemente (20) einen das Schalenelement (20) in Längsrichtung (21) durchquerenden Permeatabflußkanal (22) aufweist, der mit Permeatablauföffnungen (23, 24), die in den Innenbodenbereich (25) münden, verbunden sind.

15. Vorrichtung nach einem oder beiden der Ansprüche 13 oder 14, **dadurch gekennzeichnet, daß** der Innenquerschnitt der Schalenelemente (20) im wesentlichen rechteckig ausgebildet ist.
